(19) Europäisches Patentamt
European Patent Office
Office européen des brevets

(11) **EP 1 394 995 B1**

(12) **EUROPÄISCHE PATENTSCHRIFT**

(45) Veröffentlichungstag und Bekanntmachung des Hinweises auf die Patenterteilung:
**11.02.2009 Patentblatt 2009/07**

(51) Int Cl.:
*H04L 12/46* *(2006.01)*     *H04L 12/28* *(2006.01)*
*H04L 29/14* *(2006.01)*

(21) Anmeldenummer: **02026538.5**

(22) Anmeldetag: **27.11.2002**

(54) **Redundate Netzwerkanordnung**

Redundant network infrastructure

La redondance dans l'infrastructure du réseau

(84) Benannte Vertragsstaaten:
**AT DE ES FR**

(30) Priorität: **28.08.2002 EP 02019298**
**28.08.2002 EP 02019297**

(43) Veröffentlichungstag der Anmeldung:
**03.03.2004 Patentblatt 2004/10**

(73) Patentinhaber: **Nokia Siemens Networks GmbH & Co. KG**
**81541 München (DE)**

(72) Erfinder:
• **Arnold, Robert, Dr.**
**09423 Gelenau (DE)**
• **Hertlein, Thomas, Dr.**
**81477 München (DE)**
• **Stademann, Rainer, Dr.**
**85658 Egmating (DE)**

(56) Entgegenhaltungen:
**EP-A- 0 924 901**     **EP-A- 1 168 714**
**US-A- 5 406 549**

• **JUNGLOON LEE ET AL: "Point to point label switching protocol for optical access networks" TENCON 2001. PROCEEDINGS OF IEEE REGION 10 INTERNATIONAL CONFERENCE ONELCTRICAL AND ELECTRONIC TECHNOLOGY. SINGAPORE, AUG. 19 - 22, 2001, IEEE REGION 10 ANNUAL CONFERENCE, NEW YORK, NY: IEEE, US, Bd. 1 OF 2, 19. August 2001 (2001-08-19), Seiten 257-260, XP010556244 ISBN: 0-7803-7101-1**

**Beschreibung**

Hoch zuverlässige Kommunikationssysteme erfordern den Einsatz redundanter Nachrichtenpfade, so daß eine Störung eines einzelnen Nachrichtenpfades nicht zu Einschränkungen in der Kommunikation führt. Die Redundanz der Nachrichtenpfade, d.h. für jeden Nachrichtenpfad existiert zumindest ein Ersatz-Nachrichtenpfad, auf den im Störungsfall umgeschaltet werden kann, muß dabei von den Service-Plattformen bzw. Hosts wie auch von dem Kommunikationssystem selbst, d.h. durch dessen Elemente, z.B. Switches und Router, und dessen Struktur unterstützt werden.

Für Kommunikationssysteme mit Echtzeit-Anforderungen, beispielsweise im Fall von Übertragung von Sprache, sind außerdem auch sehr schnelle Umschaltzeiten von einem gestörten Nachrichtenpfad auf einen Ersatz-Nachrichtenpfad von großer Bedeutung, um die negativen Auswirkungen auf den Betrieb bei Ausfall eines Nachrichtenpfades auf ein Minimum zu begrenzen.

Zu berücksichtigende Störungen umfassen Totalausfälle und/oder Teilausfälle in einzelnen Elementen des Kommunikationssystems, z.B. Service-Plattform, Switches, Router, und Ausfälle der Verbindungen zwischen den einzelnen Elementen.

Ein in der Praxis sehr häufig anzutreffendes Kommunikationssystem besteht aus einem oder mehreren Hosts bzw. Service-Plattformen, die über ein Netzwerk, zumeist ein LAN (LAN = Local Area Network), und zwei Gateways an ein IP-Netzwerk (IP = Internet Protocol) angeschlossen sind.

Eine redundante Netzwerkanordnung zur Verbindung mehrerer Hosts mit Gateways wird in der Europäischen Patentanmeldung 02019298 mit dem Titel "Redundante Netzwerkanordnung" der gleichen Anmelderin beschrieben. Ein Testverfahren für Netzwerkanordnungen, insbesondere für redundante Netzwerkanordnungen gemäß 02019298, ist in der Europäischen Patentanmeldung 02019297 mit dem Titel "Testverfahren für Nachrichtenpfade in Kommunikationsnetzen sowie Netzelement" der gleichen Anmelderin beschrieben.

Die in den genannten Patentanmeldungen 02019297 und 02019298 beschriebenen Lösungen eignen sich besonders für die Verwendung mit lokalen Netzwerken, d.h. für räumlich nicht weit entfernte Hosts und Gateways.

EP 0 924 901 A2 offenbart eine Gigabit Ethernet Schnittstelle zu einen Synchronous Network (SONET)Ring. Es ist ein Verfahren und eine Vorrichtung zum Übertragen von Datenpaketen mit Hilfe von SONET von Endgeräten, welche an einem LAN angeschlossen sind, zu Endgeräten, welche an einem anderen LAN angeschlossen sind, beschrieben.

Das Dokument "Point to point label switching protocol for optical access networks", Jungloon Lee et al, IEEE Bd. 1 OF2, 19. August 2001, konzentriert sich auf das Zurverfügungstellen von Diensten mit Hilfe von PPP (Point to Point Protocol) und MPLS (Multi Protocol Label Switching) in IP over DWDM (Dense Wavelenght Division Multiplexing) Zugangsnetzen.

Es ist eine Aufgabe der vorliegenden Erfindung, eine redundante Netzwerkanordnung anzugeben, die mit räumlich weit entfernten Netzwerkelementen verwendet werden kann. Dabei soll die Netzwerkanordnung eine schnelle Erkennung gestörter Nachrichtenpfade und ein schnelles Umschalten auf ungestörte Nachrichtenpfade ermöglichen.

Diese Aufgabe wird durch eine Netzwerkanordnung gemäß der Merkmale des Patentanspruchs 1 gelöst.

Bevorzugte Ausführungsformen sind Gegenstand der abhängigen Ansprüche.

Gemäß der vorliegenden Erfindung wird eine Netzwerkanordnung für ein Kommunikationsnetz N, welches eine erste Einrichtung Host und eine zweite Einrichtung G0 verbindet, vorgesehen,

- bestehend aus einem ersten Teilnetz $N_0$ und zumindest einem zweiten Teilnetz $N_1$,
- wobei das erste Teilnetz ($N_0$) aus ersten vermittelnden Elementen $S_{00}$, $S_{01}$, $S_{02}$ besteht und wobei das zweite Teilnetz $N_1$ aus zweiten vermittelnden Elementen $S_{10}$, $S_{11}$, $S_{12}$ besteht und
- wobei das erste und das zweite Teilnetz unabhängig voneinander aufgebaut sind,
- mit zumindest einer Querverbindung $Q_1$ zwischen den Teilnetzen $N_0$, $N_1$ und
- mit zumindest einer ersten Verbindung $L_{00}$ zwischen dem ersten Teilnetz und einer ersten Schnittstelle IF0 der ersten Einrichtung Host und zumindest einer zweiten Verbindung $L_{10}$ zwischen dem zweiten Teilnetz und einer zweiten Schnittstelle IF1 der ersten Einrichtung Host und mit zumindest einer dritten Verbindung $L_{03}$ zwischen dem ersten Teilnetz und der zweiten Einrichtung G0,
- wobei Verbindungen $L_{01}$, $L_{02}$ zwischen den ersten vermittelnden Elementen $S_{00}$, $S_{01}$, $S_{02}$ und/oder Verbindungen $L_{11}$, $L_{12}$ zwischen den zweiten vermittelnden Elementen $S_{10}$, $S_{11}$, $S_{12}$ und/oder die Querverbindung(en) $Q_1$ als Weitverkehrsverbindungen WAN ausgebildet sind.

Ein wesentlicher Vorteil der Erfindung ist darin zu sehen, daß bei Verbindung mehrerer Einrichtungen Host mit der zweiten Einrichtung G0 durch die erfindungsgemäße Netzwerkanordnung N jede Einrichtung Host über jeweils zwei Schnittstellen IF0, IF1 zwei redundante Nachrichtenpfade zu der zweiten Einrichtung G0 aufweist. Einer der Nachrichtenpfade verläuft dabei über die Querverbindung $Q_1$ zwischen den zwei redundanten Teilnetzen, der andere verläuft innerhalb eines Teilnetzes.

Für das bevorzugte Ausführungsbeispiel, bei dem die Nachrichtenpfade durch ein Netzwerk N zwischen einem Host und einem Gateway G0 gebildet werden, kann aus Gründen der Zuverlässigkeit vorteilhaft ein zweiter Gateway G1 eingesetzt werden. So wird vermieden, daß der Ausfall des Default Gateway G0 zu einer Isolation des gesamten Netzwerkes N führt.

In Kombination mit dem zweiten Gateway G1 ergeben sich vorteilhaft mehrere Nachrichtenpfade, welche die Kommunikation zwischen Hosts und zumindest einem der Gateways G0, G1 auch bei Störungen einzelner Nachrichtenpfade aufgrund gestörter Verbindungen oder gestörter vermittelnder Elemente ermöglichen.

Ein weiterer Vorteil besteht darin, daß mittels der Querverbindung(en) $Q_1$ zwischen den Teilnetzen $N_0$ und $N_1$ mehrere Hosts unabhängig von den Gateways miteinander kommunizieren können, und zwar auch dann, wenn verschiedene Schnittstellen der Hosts aktiv sind. Beispielsweise kann ein erster Host mit erster aktiver Schnittstelle, verbunden mit dem ersten Teilnetz $N_0$, mit einem zweiten Host mit zweiter aktiver Schnittstelle, verbunden mit dem zweiten Teilnetz $N_1$, über die Querverbindung(en) Nachrichten austauschen. Dies wäre ohne die erfindungsgemäße Querverbindung nicht möglich.

Gegenüber den Lösungen, bei denen lediglich Local Area Networks LAN eingesetzt werden, um die erste Einrichtung Host und die weiteren Einrichtungen G0, G1 zu verbinden, ermöglicht die erfindungsgemäße Verwendung von Weitverkehrsverbindungen (Wide Area Network WAN) wesentlich größere räumliche Entfernungen zwischen den genannten Einrichtungen. Dies ist beispielsweise dann von Vorteil, wenn eine der redundanten Gateway-Einrichtungen G0, G1 z.B. zur Reduzierung von Kosten, zur Erhöhung der Sicherheit und/oder der Verfügbarkeit an einem entfernten Ort aufgestellt wird.

Von Vorteil ist ferner, daß die erfindungsgemäße Netzwerkanordnung die Administration des Gesamtnetzes wesentlich erleichtert, da viele über große Flächen verteilte Hosts von den zentral gelegenen Gateway-Einrichtungen G0, G1 aus über nur ein einzelnes IP Subnetz erreicht werden können. Das minimiert die Wahrscheinlichkeit einer Fehladministration und erhöht die Zuverlässigkeit.

Für die Überprüfung der Nachrichtenpfade kann ohne Modifikationen ein vorteilhaftes Testverfahren für Nachrichtenpfade in Kommunikationsnetzen eingesetzt werden, da die Weitverkehrsabschnitte des Kommunikationsnetzes die zu transportierenden Rahmen bzw. Pakete der Netze $N_0$, $N_1$ bzw. $N_{01}$, $N_{02}$, $N_{11}$, $N_{12}$ transparent weiterleiten und somit der Ende-zu-Ende Test der Pfade zwischen Host und Gateway(s) G0, G1 nicht beeinflußt wird.

Im folgenden wird die Erfindung im Zusammenhang mit drei Figuren als Ausführungsbeispiel näher erläutert.

Figur 1A stellt die Anbindung einer Host-Einrichtung an eine Gateway-Einrichtung über ein redundantes Netzwerk schematisch dar.

Figur 1B zeigt mögliche Nachrichtenpfade in einem redundanten Netzwerk gemäß Figur 1A.

Figur 2A zeigt schematisch die redundante Anbindung einer Host-Einrichtung an eine lokale Gateway-Einrichtung und mittels Weitverkehrsverbindung an eine entfernte Gateway-Einrichtung.

Figur 2B zeigt schematisch die redundante Anbindung einer Host-Einrichtung an entfernte Gateway-Einrichtungen mittels Weitverkehrsverbindung.

Figur 3A zeigt schematisch die redundante Anbindung einer Host-Einrichtung an eine lokale Gateway-Einrichtung und mittels Ethernet over SONET Verbindung an eine entfernte Gateway-Einrichtung.

Figur 3B zeigt schematisch die redundante Anbindung einer Host-Einrichtung an entfernte Gateway-Einrichtungen mittels Resilient Packet Ring.

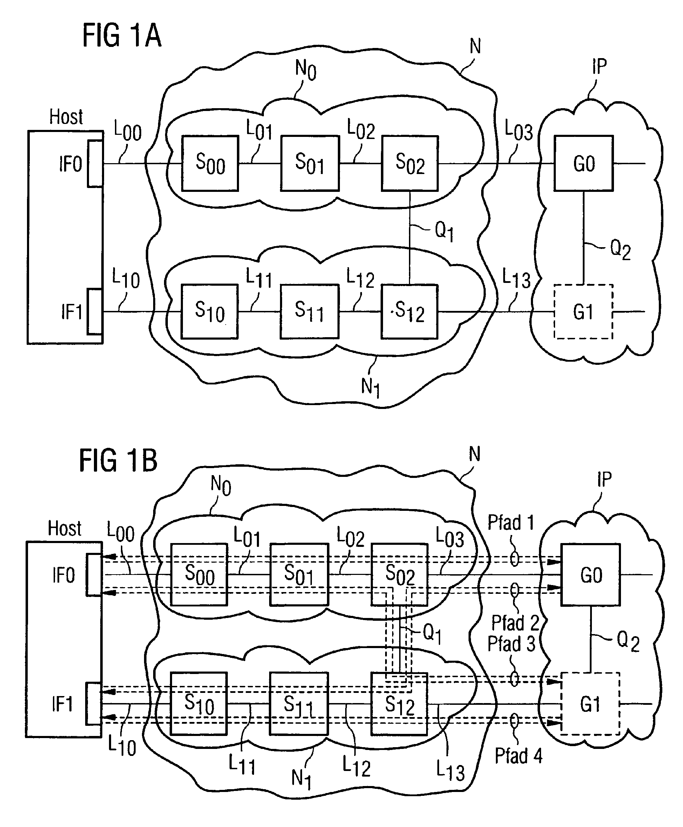

In Figur 1 ist eine erste Einrichtung Host dargestellt. Bei dieser ersten Einrichtung kann es sich beispielsweise um eine der eingangs genannten Host-Einrichtungen oder Service-Plattformen handeln. Die erste Einrichtung kann jedoch eine beliebige Kommunikationseinrichtung mit Layer 3 Kommunikationsfähigkeiten sein. Im folgenden wird zur Vereinfachung die Bezeichnung Host für die erste Einrichtung verwendet.

Der Host wird über ein Kommunikationsnetz N mit einer zweiten Einrichtung G0 verbunden. Bei dieser zweiten Einrichtung kann es sich beispielsweise um einen der eingangs genannten Gateways handeln. Die zweite Einrichtung kann jedoch ebenfalls eine beliebige Kommunikationseinrichtung mit L3 Kommunikationsfähigkeiten sein. Im folgenden wird zur Vereinfachung die Bezeichnung Gateway für die zweite Einrichtung verwendet.

Bei dem Kommunikationsnetz N handelt es sich im bevorzugten Ausführungsbeispiel um ein Netzwerk, welches bezüglich Layer 2 z.B. nach dem Ethernet-Standard arbeitet. Andere Netzwerke und/oder Protokolle sind für den transparenten Nachrichtentransport zwischen Host und Gateway einsetzbar.

Das Netzwerk N ist in zwei unabhängige Teilnetze $N_0$, $N_1$ gegliedert. Diese Gliederung wird im einfachsten Fall auf logischer Ebene realisiert, wird jedoch, um eine möglichst große Ausfallsicherheit vorzusehen, vorteilhaft auch räumlich vorgenommen. Dabei besteht das Teilnetz $N_0$ aus einer Anzahl von Vermittlungskomponenten oder Switches $S_{00}$, $S_{01}$, $S_{02}$. Dargestellt sind drei Vermittlungskomponenten, allerdings ist diese Anzahl lediglich beispielhaft und aus Sicht dieser Erfindung beliebig, ebenso wie die Struktur des Teilnetzes $N_0$ beliebig ist, die nur beispielhaft als linear dargestellt ist.

Die Switches $S_{00}$, $S_{01}$ sind mit einer Verbindung $L_{01}$ verbunden, wobei diese Verbindung repräsentativ für eine logische, bidirektionale Verbindung zwischen den Switches steht und beispielsweise physikalisch durch mehrere Verbindungen gebildet sein kann. In gleicher Weise sind die Switches $S_{01}$, $S_{02}$ mit einer Verbindung $L_{02}$ verbunden.

Das Teilnetz $N_1$ besteht aus einer Anzahl von Vermittlungskomponenten oder Switches $S_{10}$, $S_{11}$, $S_{12}$. Dargestellt sind drei Vermittlungskomponenten, allerdings ist diese Anzahl lediglich beispielhaft und aus Sicht dieser Erfindung beliebig, ebenso wie die Struktur des Teilnetzes $N_0$ beliebig ist, die nur beispielhaft als linear dargestellt ist. Die Switches $S_{10}$, $S_{11}$ sind mit einer Verbindung $L_{11}$ verbunden, wobei diese Verbindung repräsentativ für eine logische, bidirektionale Verbindung zwischen den Switches steht und beispielsweise physikalisch durch mehrere Verbindungen gebildet sein kann. In gleicher Weise sind die Switches $S_{11}$, $S_{12}$ mit einer Verbindung $L_{12}$ verbunden.

Das Teilnetz $N_0$ ist mit dem Host über eine Verbindung $L_{00}$ verbunden. Das Teilnetz $N_1$ ist mit dem Host über eine Verbindung $L_{10}$ verbunden. Dabei weist der Host zwei gesonderte Schnittstellen IF0, IF1 auf, wobei eine erste Schnittstelle IF0 der Verbindung mit $N_0$ dient und eine zweite Schnittstelle IF1 der Verbindung mit $N_1$.

Der Verbindung des Teilnetzes $N_0$ mit dem Gateway G0 dient eine Verbindung $L_{03}$. Je nach Ausprägung der Redundanztopologie verfügt das Teilnetz $N_1$ ebenfalls über eine Anbindung an Gateway G0 - nicht dargestellt - und/ oder über zumindest eine Querverbindung $Q_1$ zu $N_0$. Vorteilhaft erfolgt diese Querverbindung möglichst nah am Übergang von $N_0$ zum Gateway G0, d.h. wie in Figur 1 dargestellt beispielsweise zwischen $S_{02}$ und $S_{12}$. Ist die Querverbindung $Q_1$ nicht unmittelbar am Übergang des Teilnetzes $N_0$ zum Gateway G0 angeordnet, können geeignete Protokolle zur Vermeidung von L2 Loops im Zusammenhang mit der vorliegenden Erfindung eingesetzt werden. Es versteht sich, daß die Querverbindung $Q_1$ physikalisch aus mehreren Verbindungen bestehen kann.

In einer vorteilhaften Ausgestaltung ist zusätzlich zum Gateway G0 ein Ersatz-Gateway G1 vorgesehen, beispielsweise für den Fall des Ausfalls des Gateway G0 - gestrichelt dargestellt. Dabei können die Gateways G0, G1 ebenfalls mittels einer Querverbindung $Q_2$ verbunden sein. Eine Verbindung $L_{13}$ verbindet das Teilnetz $N_1$ und Gateway G1. Je nach Ausprägung der Redundanztopologie verfügt das Teilnetz $N_0$ ebenfalls über eine Anbindung an Gateway G1 - nicht dargestellt.

Eine Priorisierung der Gateways G0, G1 kann vorgenommen werden, indem die Gateways entsprechend administriert werden.

Beispielsweise kann die Verbindung von Gateway G0 zum Teilnetz $N_0$ als eine lower-cost Route und die Verbindung von Gateway G1 zum Teilnetz $N_1$ als eine higher-cost Route eingerichtet werden. Die Priorisierung ist eine Möglichkeit, im Fall einer Störung der Querverbindung $Q_1$ sicherzustellen, daß sowohl alle Hosts als auch das IP Netz IP stets das an den Default Gateway G0 angeschlossene Teilnetz (hier: $N_0$) zur Kommunikation verwenden. Das sichert gleichzeitig auch alle internen Kommunikationswege Host zu Host ab.

Mit der vorgestellten Netztopologie ergeben sich beispielhaft die folgenden, in Figur 1B verdeutlichten Nachrichtenpfade. Dabei werden nur interne Pfade bezüglich des Netzwerkes N betrachtet:

Pfad1: Host <-> IF0 <-> $N_0$ <-> G0 <-> IP
Pfad2: Host <-> IF1 <-> $N_1$ <-> $Q_1$ <-> $S_{02}$ <-> G0 <-> IP
Pfad3: Host <-> IF0 <-> $N_0$ <-> $Q_1$ <-> $S_{12}$ <-> G1 <-> IP
Pfad4: Host <-> IF1 <-> $N_1$ <-> G1 <-> IP

Ist für die Gateways G0, G1 die genannte Priorisierung vorgesehen und wird zudem noch eine Priorisierung der Schnittstellen IF0, IF1 vorgenommen, wobei beispielsweise IF0 die höhere Priorität hat, ergibt sich folgende Priorisierung der genannten Pfade, falls die Gateway-Priorisierung stärker wirken soll als die Schnittstellen-Priorisierung:

$$\texttt{Pfad1 > Pfad2 > Pfad3 > Pfad4}$$

Weitere Nachrichtenpfade ergeben sich in analoger Weise, wenn die genannten Über-Kreuz-Verbindungen von $N_0$ zu G1 und $N_1$ zu G0 vorhanden sind und/oder wenn weitere Querverbindungen oder auch Kreuzverbindungen innerhalb des Netzwerkes N zwischen den Teilnetzen $N_0$ und $N_1$ existieren.

In vorteilhafter Weise ergibt sich durch die mit Bezug auf Figur 1 dargestellte Netzwerkanordnung, daß jeder Host den (Default) Gateway G0 über mindestens zwei Wege erreichen kann und daß ein erster Host mit aktiver Schnittstelle IF0 und Standby-Schnittstelle IF1 mit einem weiteren Host mit Standby-Schnittstelle IF0 und aktiver Schnittstelle IF1 - nicht dargestellt - über Nachrichtenpfade kommunizieren kann. Selbst bei Störung beider Gateways G0 und G1 können die Hosts miteinander über die Querverbindung Nachrichten austauschen.

Obwohl mehrere Querverbindungen zwischen den Teilnetzen $N_0$, $N_1$ vorgesehen werden können, ist es vorteilhaft, lediglich eine Querverbindung $Q_1$ an den Switches vorzusehen, die am nächsten zu den Gateways G0, G1 liegen. So können Layer 2 Loops und damit der Einsatz eines Spanning Tree Protokolls SPT vermieden werden.

Eine Priorisierung ist jedoch nicht in allen Fällen erforderlich, beispielsweise falls die Querverbindung $Q_1$ physikalisch aus mehreren Verbindungen besteht - nicht dargestellt. In diesem Fall ist die Priorisierung nicht erforderlich, da beim Ausfall einer dieser Verbindungen zumindest eine weitere Verbindung zur Verfügung steht.

Die in Figur 1 dargestellten Verbindungen $L_{01}$, $L_{02}$ und $L_{11}$, $L_{12}$ zwischen den vermittelnden Elementen $S_{00}$, $S_{01}$, $S_{02}$ und $S_{10}$, $S_{11}$, $S_{12}$ sowie die Querverbindung $Q_1$ sind herkömmlich als lokale Verbindungen realisiert, wodurch die Netze $N_0$ und $N_1$ reine Local Area Networks LANs sind. Räumlich abgesetzte Anordnungen zwischen Host-Einrichtung und Gateway-Einrichtung(en) können dagegen realisiert werden, indem alle oder ausgewählte der erwähnten Verbindungen z.B. bezüglich Layer 1 als Weitverkehrsverbindungen ausgebildet werden.

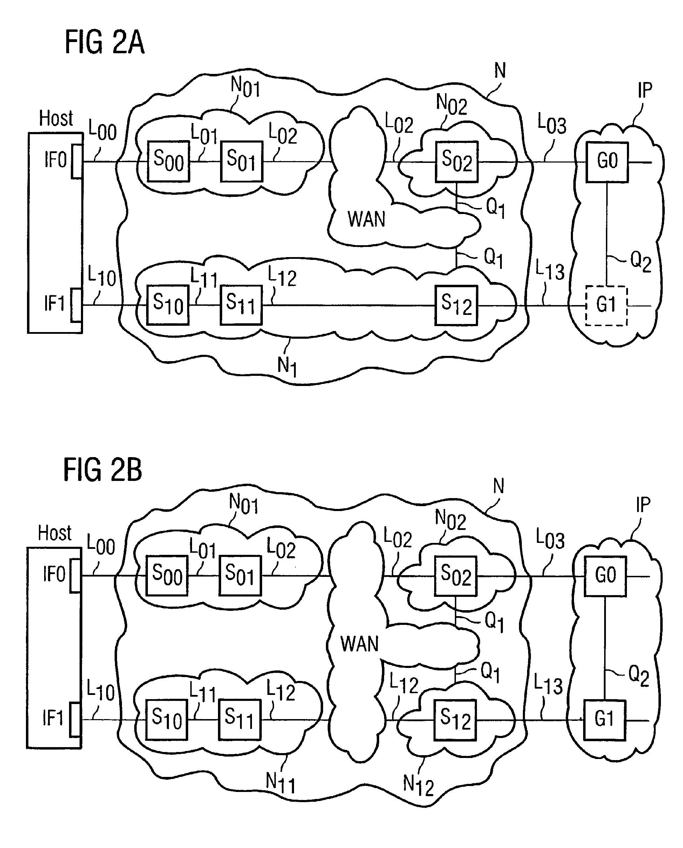

Dies ist schematisch in Figuren 2A und 2B dargestellt. In Figur 2A wird eine entfernte Gateway-Einrichtung G0 vorgesehen, die mittels eines lokalen Netzes $N_{01}$ bestehend aus den Switches $S_{00}$ und $S_{01}$ sowie der Verbindung $L_{01}$, eines schematisch dargestellten Weitverkehrsnetzes WAN und eines zweiten lokalen Netzes $N_{02}$ bestehend aus dem Switch $S_{02}$ mit einer Host-Komponente verbunden wird. Ferner wird die Querverbindung zwischen den Teilnetzen $N_{02}$ und $N_1$ ebenfalls durch das Weitverkehrsnetz WAN geleitet. Bezogen auf die Prinzipdarstellung aus Figur 1 sind in Figur 2A die Verbindungen $L_{02}$ und $Q_1$ als Weitverkehrsverbindungen realisiert; die Anbindung des optionalen zweiten, lokalen Gateways G1 erfolgt mittels des lokalen Netzes $N_1$.

In Figur 2B wird die Host-Einrichtung mit zwei entfernten Gateway-Einrichtungen G0, G1 verbunden. Die redundante Verbindung wird erreicht einerseits durch ein lokales Netz $N_{01}$ bestehend aus den Switches $S_{00}$ und $S_{01}$ sowie der Verbindung $L_{01}$ und ein lokales Netz $N_{02}$ bestehend aus Switch $S_{02}$, wobei die lokalen Netze $N_{01}$ und $N_{02}$ mittels eines Weitverkehrsnetzes WAN verbunden sind, sowie andererseits durch ein lokales Netz $N_{11}$ bestehend aus den Switches $S_{10}$ und $S_{11}$ sowie der Verbindung $L_{11}$ und ein lokales Netz $N_{12}$ bestehend aus Switch $S_{12}$, wobei die lokalen Netze $N_{11}$ und $N_{12}$ mittels des Weitverkehrsnetzes WAN verbunden sind. Bezogen auf die Prinzipdarstellung aus Figur 1 sind in Figur 2A die Verbindungen $L_{02}$, $L_{12}$ und $Q_1$ als Weitverkehrsverbindungen realisiert.

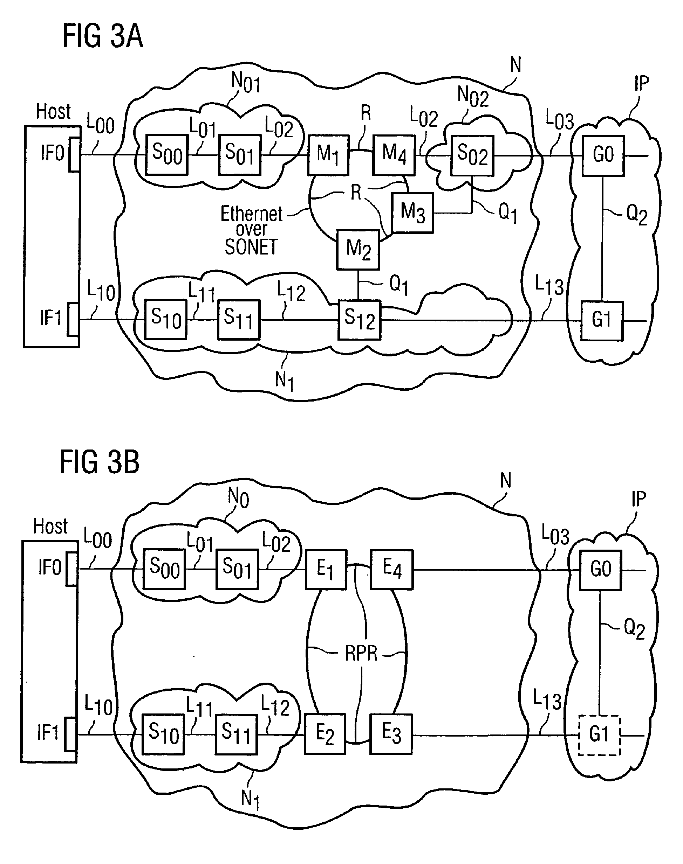

Die in Figur 2 prinzipiell dargestellten Ausführungsbeispiele der Anbindung einer Host-Einrichtung an Gateway-Einrichtung(en) werden nun mit Bezug auf Figuren 3A und 3B näher erläutert.

Figur 3A zeigt dabei in Anlehnung an die Darstellung aus Figur 2A den Fall einer Host-Einrichtung, die mit einem lokalen Gateway G1 und einem entfernten Gateway G0 verbunden ist. Die Anbindung der Host-Einrichtung an den lokalen Gateway G1 erfolgt dabei mittels eines lokalen Netzwerkes (z.B. LAN) $N_1$. Wie im Zusammenhang mit Figur 2A beschrieben, werden in Figur 3A die Verbindung $L_{02}$ und die Querverbindung $Q_1$ durch eine Weitverkehrsverbindung (WAN = Wide Area Network) gebildet. Das WAN ist im Beispiel der Figur 3A als Ethernet-over-SONET Ring ausgebildet. Vier Elemente, bevorzugt vier ADD/DROP Multiplexer $M_1$, $M_2$, $M_3$, $M_4$ sind dabei in einer Ringstruktur angeordnet, d.h. der Ring R verbindet $M_1$ mit $M_2$, $M_2$ mit $M_3$, $M_3$ mit $M_4$ und $M_4$ mit $M_1$ jeweils bidirektional. Als Besonderheit wird der SONET Ring bevorzugt so konfiguriert, daß Punkt-zu-Punkt Verbindungen realisiert werden.

Die in Figur 1B schematisch dargestellten Nachrichtenpfade können im Ausführungsbeispiel der Figur 3A beispielsweise wie folgt realisiert werden:

Pfad1: Host <-> IF0 <-> $N_{01}$ <-> $M_1$ <-> $M_4$ <-> $N_{02}$ <-> IP
Pfad2: Host <-> IF1 <-> $N_1$ <-> $M_2$ <-> $M_3$ <-> $N_{02}$ <-> IP
Pfad3: Host <-> IF0 <-> $N_{01}$ <-> $M_1$ <-> $M_2$ <-> $N_1$ <-> IP
Pfad4: Host <-> IF1 <-> $N_1$ <-> IP

Dabei erlaubt die redundante Ringstruktur die Konfiguration von Ersatzwegen, beispielsweise bei Ausfall des Ringsegmentes zwischen $M_1$ und $M_4$ kann dieser Abschnitt des Pfad1 wie folgt ersatzgeschaltet werden:

$M_1$ <-> $M_2$ <-> $M_3$ <-> $M_4$ oder
$M_1$ <-> $M_2$ <-> $M_3$ <-> $N_{02}$

In analoger Weise sind interne Ersatzwege bezüglich des WAN angebbar für andere Ausfälle; Verfahren hierzu sind hinreichend bekannt.

Figur 3B zeigt dabei in Anlehnung an die Darstellung aus Figur 2B den Fall einer Host-Einrichtung, die mit zwei entfernten Gateways G0, G1 verbunden ist, wobei der Gateway G1 optional ist. Die Anbindung der Host-Einrichtung an Gateway G0 erfolgt dabei mittels eines lokalen Netzwerkes (z.B. LAN) $N_0$ sowie eines Resilient Packet Rings RPR gemäß IEEE 802.17 oder einem vergleichbaren WAN Ring (z.B. Extreme Networks Ethernet Automatic Protection Switching EAPS oder Cisco Resilient Packet Ring Technology). Verbindung $L_{02}$ verbindet das Teilnetz $N_0$ mit dem RPR, wobei letzterer beispielhaft als bestehend aus vier Ethernet-Switches (vorzugsweise Gigabit-Ethernet) $E_1$, $E_2$, $E_3$, $E_4$ und einer Ringverbindung RPR dargestellt ist. Der Ring RPR verbindet $E_1$ mit $E_2$, $E_2$ mit $E_3$, $E_3$ mit $E_4$ und $E_4$ mit $E_1$ jeweils bidirektional.

Im Unterschied zur Darstellung in Figur 2B erfolgt in Figur 3B die Verbindung zwischen dem WAN und den Gateways direkt mittels der Verbindungen $L_{03}$ und $L_{13}$, kann jedoch auch, wie in Figur 2B dargestellt, weitere Elemente einschließen. Die Querverbindung $Q_1$ wird durch den RPR gebildet. Schematisch betrachtet ersetzt der RPR in Figur 3B die Switches $S_{02}$ und $S_{12}$ sowie die Querverbindung $Q_1$ aus Figur 1.

Die Anbindung der Host-Einrichtung an den (optionalen) Gateway G1 erfolgt mittels eines lokalen Netzwerkes (z.B. LAN) $N_1$ sowie des RPR. Verbindung $L_{12}$ verbindet das Teilnetz $N_1$ mit dem RPR.

Die in Figur 1B schematisch dargestellten Nachrichtenpfade können im Ausführungsbeispiel der Figur 3B beispielsweise wie folgt realisiert werden:

Pfad1: Host <-> IF0 <-> $N_0$ <-> $E_1$ <-> RPR <-> $E_4$ <-> IP
Pfad2: Host <-> IF1 <-> $N_1$ <-> $E_2$ <-> RPR <-> $E_4$ <-> IP
Pfad3: Host <-> IF1 <-> $N_0$ <-> $E_1$ <-> RPR <-> $E_3$ <-> IP
Pfad4: Host <-> IF0 <-> $N_1$ <-> $E_2$ <-> RPR <-> $E_3$ <-> IP

Wie dabei die Kommunikationswege im RPR verlaufen, hängt vom momentanen Zustand des Ringes selbst ab und ist für das hier beschriebene Verfahren unerheblich, da die redundante Ringstruktur und das Ringprotokoll die automatische Konfiguration von Ersatzwegen sichern, beispielsweise bei Ausfall des Ringsegmentes zwischen $E_1$ und $E_4$ wird dieser Abschnitt durch das Ringprotokoll wie folgt ersatzgeschaltet: $E_1$ <-> $E_2$ <-> $E_3$ <-> $E_4$.

In analoger Weise sind interne Ersatzwege bezüglich des WAN angebbar für andere Ausfälle; Verfahren hierzu sind hinreichend bekannt.

Die erfindungsgemäße Netzwerkanordnung kann vorteilhaft mit einem Verfahren zum Test der Nachrichtenpfade kombiniert werden, welches im folgenden kurz beschrieben wird.

Der Test der Nachrichtenpfade erfolgt, indem der Host über jedes Interface bzw. jede Schnittstelle IF0, IF1 an jeden Gateway G0, G1 in sehr kurzen zeitlichen Abständen, z.B. aller 100 ms, spezielle Test IP Datagramme sendet. Als Source IP Adresse und als Destination IP Adresse wird die IP Adresse der jeweiligen eigenen Schnittstelle IF0 bzw. IF1 eingetragen. So wird das Test-Paket durch den Gateway wieder an die sendende Schnittstelle IF0, IF1 des Host zurückgespiegelt.

Folgende Tabelle zeigt die zu wählenden IP und MAC Adressen zum Test der Nachrichtenpfade Pfad1..Pfad4

|  | Pfad1 | Pfad2 | Pfad3 | Pfad4 |
|---|---|---|---|---|
| Destination-MAC | G0 | G0 | G1 | G1 |
| Source-MAC | IF0 | IF1 | IF0 | IF1 |
| Destination-IP | IF0 | IF1 | IF0 | IF1 |
| Source-IP | IF0 | IF1 | IF0 | IF1 |

Prinzipiell erfolgt also die Adressierung der Layer 2 Nachrichten korrekt anhand der jeweiligen MAC (MAC = Media Access Control) Adressen, wohingegen die Adressierung der übergeordneten Layer 3 Nachrichten so modifiziert wird, daß die Layer 3 Nachrichten zur sendenden Instanz zurückgeroutet werden. Dieses Prinzip fußt auf der Tatsache, daß in der Regel Nachrichten des Layer n beim Transport durch ein Layer n-1 Netzwerk nicht modifiziert werden und daß Layer n Adreßinformationen durch das Layer n-1 Netzwerk nicht ausgewertet werden.

Für IP Testnachrichten besteht ein wichtiger Vorteil darin, daß nur die "IP-Forwarding" Funktion, die auf den hoch leistungsfähigen Schnittstellenkarten der Gateways realisiert ist, für die Spiegelung bzw. Rücksendung der Testnachrichten an die sendende Instanz erforderlich ist. Eine Überlastsituation im Gateway durch das Testverfahren kann somit nicht eintreten, da der Vermittlungsprozessor der Gateways überhaupt nicht in die Bearbeitung der Testnachrichten involviert ist.

Wird innerhalb einer bestimmten Zeit, z.B. 100 ms, die beim jeweiligen Ziel gespiegelte Testnachricht vom Host nicht wieder empfangen, liegt wahrscheinlich eine Störung des entsprechenden Nachrichtenpfades vor. Dies wird beispielweise in einem Speicher vermerkt. Die Störung des Nachrichtenpfades kann auch erst dann als andauernde Störung vermerkt werden, wenn auch die folgende, mit diesem Nachrichtenpfad assoziierte Testnachricht nicht wieder beim Host empfangen wird. Es kann auch die Anzahl der aufeinanderfolgenden Nachrichten, die pro Nachrichtenpfad verlorengehen dürfen, bevor dies als Störung gewertet wird, den jeweiligen Anforderungen anpaßbar gestaltet werden.

Es besteht ferner die Möglichkeit, die ausgesendeten Testnachrichten mit Folgenummern oder Sequenznummern zu kennzeichnen. Diese werden in die Payload der Testnachrichten eingetragen. Der Verlust einer konfigurierbaren Anzahl nicht notwendigerweise aufeinanderfolgender Testnachrichten kann ebenso als Kriterium für die Ausfallerkennung herangezogen werden, d.h. die Nachrichtenpfade werden durch Numerierung der Testnachrichten überwacht. Der Zähler für verlorene Testnachrichten kann dabei so gestaltet sein, daß eine verlorene Testnachricht den Zähler um 1 erhöht und eine konfigurierbare Anzahl verlustfrei empfangener Testnachrichten, z.B. 1000, den Zähler um 1 erniedrigt. Alternativ kann das Erniedrigen des Zählers nach Ablauf einer Zeitspanne, während der kein Testnachrichtenverlust aufgetreten ist, erfolgen. Erreicht der Zähler einen Grenzwert, wird der Nachrichtenpfad als gestört gewertet.

Werden die Nachrichtenpfade mit hinreichend kurzen zeitlichen Abständen mit Hilfe des erfindungsgemäßen Verfahrens überprüft, z.B. aller 100 ms, und wird ein fehlgeschlagener Test genau einmal wiederholt, bevor der entsprechende Pfad als gestört gewertet wird, wird bei Fehlschlagen des wiederholten Tests der Nachrichtenpfad mit sehr geringer Verzögerung, hier 200 ms, als gestört erkannt.

Dem Fachmann ist es anhand des konkreten Einsatzfalles ohne weiteres möglich, die beschriebenen Parameter des Testverfahrens an den Einsatzfall anzupassen.

Nachdem eine Störung erkannt und vermerkt wurde, besteht die Notwendigkeit, den Nutzdatenverkehr des gestörten Nachrichtenpfades auf einen anderen, ungestörten Nachrichtenpfad umzulenken. Die Verfahren hierzu sind wohlbekannt. Beispielsweise sendet der Host einen "Gratituous ARP", d.h. einen ARP Request bzgl. der eigenen IP Addresse. Als Source MAC Addresse verwendet der Host die Schnittstelle, von der die Anforderung ausgeht, und als gesuchte IP Addresse die eigene IP Addresse. Durch den ARP Broadcast werden die ARP Caches aller angeschlossenen Hosts und Gateways mit der MAC/IP Addressrelation aktualisiert. Die Umschaltung erfolgt beispielsweise auf die erwähnten Ersatz-Nachrichtenpfade, die gemäß ihrer Priorisierung ausgewählt werden.

Obwohl das Ausführungsbeispiel der Erfindung mit Bezug auf eine IP/LAN Umgebung beschrieben ist, ist die Erfindung nicht auf diese Protokollumgebung beschränkt. Verbindungsorientierte Protokolle können beispielsweise für der Host-Gateway Verbindung genutzt werden. Wird durch das Protokoll eine Unterbrechung der Verbindung erkannt, kann eine Umschaltung auf einen redundanten Übertragungsweg veranlaßt werden. Beispiel für solche Protokolle sind Real Time Protocol RTP oder Stream Control Transmission Protocol SCTP.

Mit SONET und Resilient Packet Ring wurde die vorliegende Erfindung für zwei typische redundante WAN Verfahren beschrieben. Andere WAN Verfahren sind selbstverständlich ebenfalls, insbesondere im Zusammenhang mit der Lehre der Figuren 1 und 2, für die vorliegende Erfindung anwendbar.

**Patentansprüche**

1. Netzwerkanordnung für ein Kommunikationsnetz (N), welches eine erste Einrichtung (Host) und einen Gateway (G0) verbindet,

- bestehend aus einem ersten Teilnetz ($N_0$) und zumindest einem zweiten Teilnetz ($N_1$) ,
- wobei das erste Teilnetz ($N_0$) aus ersten vermittelnden Elementen ($S_{00}$, $S_{01}$, $S_{02}$) besteht und wobei das zweite Teilnetz ($N_1$) aus zweiten vermittelnden Elementen ($S_{10}$, $S_{11}$, $S_{12}$) besteht und
- wobei das erste und das zweite Teilnetz unabhängig voneinander aufgebaut sind,
- mit zumindest einer Querverbindung ($Q_1$) zwischen den Teilnetzen ($N_0$, $N_1$) und
- mit zumindest einer ersten Verbindung ($L_{00}$) zwischen dem ersten Teilnetz und einer ersten Schnittstelle (IF0) der ersten Einrichtung (Host) und zumindest einer zweiten Verbindung ($L_{10}$) zwischen dem zweiten Teilnetz und einer zweiten Schnittstelle (IF1) der ersten Einrichtung (Host) und mit zumindest einer dritten Verbindung ($L_{03}$) zwischen dem ersten Teilnetz und dem Gateway (G0),
- wobei Verbindungen ($L_{01}$, $L_{02}$) zwischen den ersten vermittelnden Elementen ($S_{00}$, $S_{01}$, $S_{02}$) und/oder Verbindungen ($L_{11}$, $L_{12}$) zwischen den zweiten vermittelnden Elementen ($S_{10}$, $S_{11}$, $S_{12}$) und/oder die Querverbindung(en) ($Q_1$) als Weitverkehrsverbindungen (WAN) ausgebildet sind,

**dadurch gekennzeichnet,**
**daß** zumindest eine der Querverbindungen ($Q_1$) unmittelbar am Übergang des Kommunikationsnetzes (N) zum Gateway (G0) angeordnet ist.

2. Netzwerkanordnung nach Anspruch 1,
mit zumindest einer vierten Verbindung ($L_{13}$) zwischen dem zweiten Teilnetz und einer dem Gateway (G0) gleichartigen dritten Einrichtung (G1).

3. Netzwerkanordnung nach Anspruch 1,
**dadurch gekennzeichnet,**
**daß** die Kommunikation zwischen der ersten und dem Gateway und/oder der dritten Einrichtung mittels Nachrichten einer ersten Protokollschicht erfolgt, deren Übertragung im Kommunikationsnetz (N) mittels einer der ersten Protokollschicht untergeordneten zweiten Protokollschicht erfolgt.

4. Netzwerkanordnung nach Anspruch 3,
**dadurch gekennzeichnet,**
**daß** die erste Protokollschicht durch das Internet Protocol IP gebildet wird und die zweite Protokollschicht durch ein Protokoll eines Local Area Network LAN gebildet wird.

**5.** Netzwerkanordnung nach Anspruch 4,
**dadurch gekennzeichnet,**
**daß** Weitverkehrsverbindung(en) (WAN) als Ethernet over SONET Verbindungen ausgeführt sind.

**6.** Netzwerkanordnung nach Anspruch 4,
**dadurch gekennzeichnet,**
**daß** Weitverkehrsverbindung(en) (WAN) als Resilient Packet Ring RPR ausgeführt sind.

**Claims**

**1.** Network infrastructure for a communication network (N) which connects a first device (Host) and a gateway (G0),

- consisting of a first sub-network ($N_0$) and at least one second sub-network ($N_1$),
- wherein the first sub-network ($N_0$) consists of first switching elements ($S_{00}$, $S_{01}$, $S_{02}$) and wherein the second sub-network ($N_1$) consists of second switching elements ($S_{10}$, $S_{11}$, $S_{12}$), and
- wherein the first and the second sub-network are constructed independently of one another,
- with at least one cross connection ($Q_1$) between the sub-networks ($N_0$, $N_1$) and
- with at least one first connection ($L_{00}$) between the first sub-network and a first interface (IFO) of the first device (Host) and at least one second connection ($L_{10}$) between the second sub-network and a second interface (IF1) of the first device (Host) and with at least one third connection ($L_{03}$) between the first sub-network and the gateway (G0),
- wherein connections ($L_{01}$, $L_{02}$) between the first switching elements ($S_{00}$, $S_{01}$, $S_{02}$) and/or connections ($L_{11}$, $L_{12}$) between the second switching elements ($S_{10}$, $S_{11}$, $S_{12}$) and/or the cross connection(s) ($Q_1$) are constructed as wide area network connections (WAN), **characterized in that** at least one of the cross connections ($Q_1$) is arranged directly at the transition of the communication network (N) to the gateway (G0) .

**2.** Network infrastructure according to Claim 1,
with at least one fourth connection ($L_{13}$) between the second sub-network and a third device (G1) similar to the gateway (G0).

**3.** Network infrastructure according to Claim 1,
**characterized in that** the communication between the first device and the gateway and/or the third device is carried out by means of messages of a first protocol layer, the transmission of which in the communication network (N) occurs by means of a second protocol layer of lower level than the first protocol layer.

**4.** Network infrastructure according to Claim 3,
**characterized in that** the first protocol layer is formed by the Internet Protocol IP and the second protocol layer is formed by a protocol of a Local Area Network LAN.

**5.** Network infrastructure according to Claim 4,
**characterized in that** wide area network connection(s) (WAN) are arranged as Ethernet over SONET connections.

**6.** Network infrastructure according to Claim 4,
**characterized in that** wide area network connection(s) (WAN) are arranged as resilient packet ring RPR.

**Revendications**

**1.** Agencement de réseau pour un réseau de communication (N), qui relie un premier dispositif (Host) et une passerelle (G0),

- constitué d'un premier réseau partiel ($N_0$) et au moins d'un second réseau partiel ($N_1$),
- le premier réseau partiel ($N_0$) étant constitué de premiers éléments ($S_{00}$, $S_{01}$, $S_{02}$) transmetteurs et le second réseau partiel ($N_1$) de seconds éléments ($S_{10}$, $S_{11}$, $S_{12}$) transmetteurs et,
- le premier et le second réseaux partiels étant conçus indépendamment l'un de l'autre,
- avec au moins une liaison transversale ($Q_1$) entre les réseaux partiels ($N_0$, $N_1$) et
- avec au moins une première liaison ($L_{00}$) entre le premier réseau partiel et une première interface (IFO) du premier dispositif (Host) et au moins une seconde liaison ($L_{10}$) entre le second réseau partiel et une seconde interface (IF1) du premier dispositif (Host) et avec au moins une troisième liaison ($L_{03}$) entre le premier réseau partiel et la passerelle (G0),

- des liaisons ($L_{01}$, $L_{02}$) entre les premiers éléments ($S_{00}$, $S_{01}$, $S_{02}$) transmetteurs et/ou des liaisons ($L_{11}$, $L_{12}$) entre les seconds éléments ($S_{10}$, $S_{11}$, $S_{12}$) transmetteurs et/ou la (les) liaison(s) transversale(s) ($Q_1$) étant conçues comme des liaisons à grande distance (WAN),

**caractérisé en ce que**
au moins l'une des liaisons transversales ($Q_1$) est disposée directement sur la transition du réseau de communication (N) avec la passerelle (G0).

2. Agencement de réseau selon la revendication 1,
comprenant au moins une quatrième liaison ($L_{13}$) entre le second réseau partiel et un troisième dispositif (G1) similaire à la passerelle (G0).

3. Agencement de réseau selon la revendication 1,
**caractérisé en ce que**
la communication entre le premier dispositif et la passerelle et/ou le troisième dispositif s'effectue au moyen de messages d'une première couche de protocole, dont la transmission dans le réseau de communication (N) s'effectue au moyen d'une seconde couche de protocole subordonnée à la première couche de protocole.

4. Agencement de réseau selon la revendication 3,
**caractérisé en ce que**
la première couche de protocole est formée par le Internet Protocol IP et la seconde couche de protocole est formée par un protocole d'un Local Area Network LAN.

5. Agencement de réseau selon la revendication 4,
**caractérisé en ce que**
les liaisons à grande distance (WAN) sont conçues sous forme de liaisons Ethernet over SONET.

6. Agencement de réseau selon la revendication 4,
**caractérisé en ce que**
les liaisons à grande distance (WAN) sont conçues sous la forme de Resilient Packet Ring RPR.

## FIG 1A

## FIG 1B

## FIG 2A

## FIG 2B

## FIG 3A

## FIG 3B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 02019298 A
- EP 02019297 A
- WO 02019297 A
- WO 02019298 A
- EP 0924901 A2

**In der Beschreibung aufgeführte Nicht-Patentliteratur**

- **JUNGLOON LEE et al.** *Point to point label switching protocol for optical access networks,* 19. August 2001, vol. 1